# EUROPEAN PATENT APPLICATION

(11) **EP 1 820 951 A1**
(43) Date of publication of application: **22.08.2007**
(21) Application number: 07425055.6
(22) Date of filing: 01.02.2007
(51) Int. Cl.: F02D 19/06, F02M 21/02, F02M 61/14, F02M 35/10

(54) **Gas injector-holder**

(30) Priority: 17.02.2006 IT RM20060027 U
(71) Applicant: D'Apuzzo, Luigi, Castellammari di Stabia NA (IT)
(72) Inventor: D'Apuzzo, Luigi, Castellammari di Stabia NA (IT)

(57) **Abstract**

(component fig.1 and fig. 2 (b)); a spacer-diffuser and petrol injector support, which is fitted in the intake manifold opening (originally created for petrol injection); it also supports the nozzle through which the gas from the corresponding (gas) injector enters.
(component fig. 1 and fig. 2 (a)); a nozzle that is used to feed the gas into the main component (fig.1 and fig. 2 (b)), which then diffuses either the gas, or the petrol into the intake manifold.
The component may be produced either in metal or composite materials, and assume a range of shapes and sizes in order to adapt to various petrol injectors and engine types. The drawings illustrate different concepts for producing the gas injector-holder.

## Description

This device is for use with dual gas/petrol engines and enables the gas to be injected at the same point as the petrol.

Until now, in the case of dual gas/petrol engines, the gas has been injected by special injectors connected to the intake manifold of an endothermic engine, via specially created openings. This means that current engines have two sets of openings, one for gas and one for petrol injection.

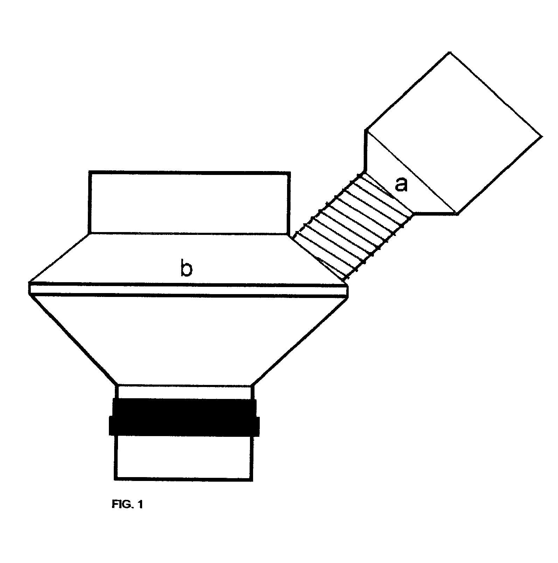

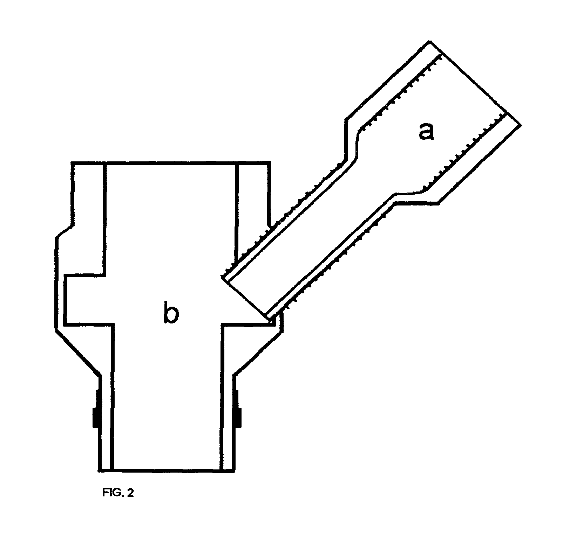

My invention involves inserting a specially designed gas injector-holder under the petrol injector in order to raise it by approximately 10 - 20 mm, so that the gas can flow from its own injector through the same opening. This solution means that gas can be injected from the same position as petrol, creating a perfect equilibrium between petrol and gas fuel systems. In fact, when the engine switches between the two systems, the two fuels are mixed together in the same grooved section where the gas and petrol injectors inject the respective fuels. This mixing process, that takes place in the main injector-holder chamber (component fig.1 and fig. 2 (b)), enhances vehicle fluidity during the switch between fuels systems. Furthermore, there is no need to create extra openings in the intake manifold to accommodate the gas injectors; thanks to my invention, it is possible to use the same openings as the petrol injectors; in fact, the injector-holder must inserted via the existing openings (for the petrol injector), on the intake manifold, and the petrol injector; while the side of the injector-holder is fitted with a calibrated, inclined nozzle (component fig. 1 and fig. 2 (a)) where the gas arrives from its respective injector.

The nozzle (component fig. 1 and fig. 2 (a)) may not be essential where the gas is fed into the main component (fig.1 and fig. 2 (b)), (and hence to the same petrol injection opening on the intake manifold) directly from the gas injector, for example, however, it (component fig.1 and fig. 2 (a)) is useful in that it helps to adapt to the various types of gas injector. Also, it is not essential that the two parts (fig.1 and fig. 2 (a)) and (fig.1 and fig. 2 (b)) be separate and/or separable; in fact, this object could be produced in plastic, using a single mould; or the nozzle (fig. 1 and fig. 2 (a)) could be screwed or snapped into a opening on the side of the component (fig.1 and fig. 2 (b)) (as illustrated in the drawing).

## Claims

1. I hereby claim the right to be considered the inventor of an innovative system whereby gas is injected into the intake manifold of endothermic engines via the existing petrol injection opening.

2. By slightly raising the petrol injector from its original position, but without altering it, this mechanism enables the gas injector to inject, and thus to fuel the engine, from the same position as the petrol injector, making use of the same opening.
